# EUROPÄISCHE PATENTSCHRIFT

(11) **EP 1 662 288 B1**
(45) Veröffentlichungstag und Bekanntmachung des Hinweises auf die Patenterteilung: **05.11.2008**
(21) Anmeldenummer: 05090323.6
(22) Anmeldetag: 24.11.2005
(51) Int. Cl.: G02B 6/44

(54) **Schutzeinrichtung für Lichtleitfasern**
Lightguide fiber protection device
Dispositif de protection pour fibre guide de lumière

(30) Priorität: 24.11.2004 DE 102004057448
(43) Veröffentlichungstag der Anmeldung: 31.05.2006
(73) Patentinhaber: Highyag Lasertechnologie GmbH, 14532 Stahnsdorf (DE)
(72) Erfinder: Niedrig, Roman, 12167 Berlin (DE)
(74) Vertreter: Boeckh, Tobias

(56) Entgegenhaltungen:
- EP-A- 0 006 364
- EP-A- 0 320 108
- EP-A- 1 378 778
- DE-A1- 4 010 789
- US-A- 5 012 087

## Beschreibung

Die Erfindung betrifft eine Schutzeinrichtung für eine Lichtleitfaser, die der Übertra- 1 gung von Laserlicht dient.

Bei der Arbeit mit Laserlicht stellt unkontrolliert aus dem vorgegebenen Strahlverlauf austretende Strahlung eine erhebliche Gesundheitsgefahr dar. Insbesondere Brüche von Lichtleitfasern führen zum unkontrollierten Austritt von Laserlicht. Aus Gründen der Arbeitssicherheit ist daher für Hochleistungs-Lichtleitkabel (LLK) ein Sicherheitssystem zur Bruchüberwachung vorgeschrieben. Im Falle einer Beschädigung des LLKs soll das Sicherheitssystem auslösen und den Laser abschalten, um zu verhindern, dass sich Laserlicht unkontrolliert in den Arbeitsräumen ausbreitet.

Sicherheitssysteme nach dem gegenwärtigen Stand der Technik, wie z.B. in der DE 30 41 649 A1 beschrieben, verwenden einen Kupferdraht, der in den Mantel des LLKs eingebracht ist. Bei einem Bruch des LLKs wird der Kupferdraht entweder mechanisch durchtrennt oder er fungiert als Schmelzsicherung, indem die austretende Laserstrahlung den Kupferdraht durchschmilzt. Durch diese Unterbrechung des elektrischen Kontaktes (Widerstandsmessung) wird dann das Sicherheitssystem ausgelöst.

Aus der DE 40 10 789 A1 ist ein Lichtleitkabelsystem bekannt, welches aus einer zu überwachenden Hauptlichtleitfaser mit einem transparenten Fasermantel ("cladding") und einem Kabelmantel besteht, wobei zusätzlich zur zu überwachenden Hauptlichtleitfaser eine Überwachungslichtleitfaser in den Kabelmantel eingebracht ist, die parallel zur zu überwachenden Hauptlichtleitfaser verläuft und wobei die Überwachungslichtleitfaser mit einem Sende-/Empfängersystem verbunden ist. Die-ses Sende-/Empfängersystem detektiert den Ausfall der Überwachungslichtleitfaser infolge einer Beschädigung der Hauptlichtleitfaser.

Ferner ist aus der EP 0 320 108 A2 ein Lichtleitkabelsystem bekannt, bei dem über die Überwachung der Leitfähigkeit leitfähiger Polymere (mit Metallpartikeln), die mit der Lichtleitfaser in Verbindung stehen, ein Bruch oder ein Leistungsabfall detektiert wird.

Die Verwendung von Kupferdraht, wie in der DE 40 10 789 A1 beschrieben, hat den unerwünschten Nebeneffekt, dass das Lichtleitkabel als Antenne wirkt. Daraus resultiert eine elektromagnetische Ankopplung der Außenwelt an die Quelle der Laserstrahlung, den Laser. Im Laser werden, insbesondere bei gepulstem Betrieb, elektromagnetische Schwingungen und Wellen erzeugt, die dann über den als Antenne wirkenden Kupferdraht in den Raum abgestrahlt werden. Eine solche Emission kann die Arbeit behindern und ist außerdem nach den geltenden Vorschriften zum Schutz vor elektromagnetischer Strahlung (elektromagnetische Verträglichkeit) nicht zulässig. Deshalb müssen aufwendige Schutzmaßnahmen, wie zum Beispiel Zwischenstücke oder zusätzliche Abschirmungen, ergriffen werden, die jedoch die Flexibilität des Kabels herab- und sein Gewicht heraufsetzen.

Systeme, welche auf der Auswertung eines Stromflusses durch einen Leiter basieren, bei dem nach Unterschreiten eines Mindeststromes die Lichtquelle abgeschaltet wird, reagieren oft erst dann, wenn das LLK durchgebrochen oder durchgebrannt ist. Mit den genannten Systemen können nur fatale Schäden am LLK entdeckt werden. Diese Sicherheitssysteme können also erst dann ausgelöst werden, wenn das LLK vollständig zerstört ist, nämlich wenn das LLK gebrochen oder durch Strahlungsaustritt aus der Hauptfaser durchgebrannt ist.

Die EP 0 113 104 beschreibt dagegen ein Lichtleitkabelsystem, bei dem die Hauptlichtleitfaser eng benachbart zu einer kunststoffummantelten Referenzlichtleitfaser belegen ist. Bei Bruch der Hauptlichtleitfaser schmilzt der benachbarte Kunststoff-mantel der Referenzlichtleitfaser, so dass das in dieser Faser geführte Referenzlicht nicht zu einer Detektionseinheit gelangt. Auf diese Weise wird ein Bruch der Faser angezeigt.

Ausgehend von diesem Stand der Technik ist es Aufgabe der vorliegenden Erfindung, eine Vorrichtung zur Überwachung von Lichtleitkabeln zur Verfügung zu stellen, welche einerseits die Widerstandsfähigkeit des Schutzschlauches gegen Zerstörung durch austretendes Laserlicht erhöht und andererseits die Ansprechempfindlichkeit der Überwachung der Lichtleitfaser wesentlich verbessert. Ferner soll zum einen die Lichtleitfaser vor äußeren, z.B. mechanischen Einflüssen geschützt werden, zum anderen sollen Personen vor dem im Inneren der Lichtleitfaser transportierten Laserlicht geschützt werden.

Gelöst wird diese Aufgabe durch die Merkmale des selbstständigen Anspruchs.

Danach ist eine Schutzeinrichtung für eine Lichtleitfaser vorgesehen, bestehend aus einem Schutzschlauch, mindestens einer durch den Schutzschlauch geführten elektrischen Leiterschleife mit einer definierten elektrischen Impedanz und einer besonderen Isolation der Leiterschleife. Erfindungsgemäß zeichnet sich diese Schutzeinrichtung dadurch aus, dass
a) der Schutzschlauch einen zwei- oder mehrlagigen Aufbau besitzt, bestehend aus einer inneren Lage aus einem optisch transparenten, elektrisch isolierenden Material sowie mindestens einer darüberliegenden Lage aus einem nicht-transparenten Material, und
b) eine Leiterschleife zusätzlich zur Lichtleitfaser durch den Schlauch geführt ist, bestehend aus zwei gegeneinander isolierten elektrischen Leitern, die an einem Ende des Schlauches über eine definierte elektrische Impedanz und am anderen Ende mit einer die Impedanz kontrollierenden Messeinheit verbunden sind,
c) wobei die Isolation der beiden elektrischen Leiter so gewählt ist, dass sie durch die Wärmewirkung von austretendem Licht bei einem Bruch der Lichtleitfaser oder durch die Strahlung, entweder zur Beeinflussung der elektrischen Leiter oder zu einem direkten Kontakt der elektrischen Leiter führt oder mindestens einer der elektrischen Leiter durchtrennt wird, und
d) eine Änderung des Widerstandes durch die Messeinheit detektierbar ist.

Insbesondere ist eine Ausführungsform der Schutzeinrichtung für die Übertragung von Laserleistungen unter 500 W bevorzugt, wobei der Schutzschlauch einen mehrschichtigen Aufbau (von innen nach außen) aufweist, umfassend
a. eine innerste Lage, die durch einen transparenten, ungefärbten Schlauch aus PTFE gebildet wird;
b. darüber liegend eine nicht-transparente Lage, insbesondere eine metallische Lage, bevorzugt ein Geflecht, eine Umspinnung oder eine Bandierung aus blankem Kupfer,
c. eine dem mechanischen Schutz dienende und den äußeren Abschluss des Schutzschlauches bildende Ummantelung.

Ferner ist eine Ausführungsform der Schutzeinrichtung für die Übertragung von hohen Laserleistungen über 500 W bevorzugt, wobei der Schutzschlauch einen mehrschichtigen Aufbau (von innen nach außen) aufweist, umfassend
a. eine innerste Lage, die durch einen transparenten, ungefärbten Schlauch aus PTFE gebildet wird;
b. darüber liegend eine erste nicht-transparente Lage, insbesondere eine metallische Lage, bevorzugt ein Geflecht, eine Umspinnung oder eine Bandierung aus blankem Kupfer,
c. gefolgt von einer ersten, isolierenden Trennlage,
d. darüber liegend eine weitere nicht-transparente Lage, insbesondere eine metallische Lage, bevorzugt ein Geflecht, eine Umspinnung oder eine Bandierung aus blankem Kupfer,
e. gefolgt von einer weiteren, isolierenden Trennlage,
f. die von einer Lage aus Zugentlastungselementen ummantelt ist,
g. und eine dem mechanischen Schutz dienende und den äußeren Abschluss des Schutzschlauches bildende Ummantelung.

Der Aufbau des erfindungsgemäßen Schutzschlauchs ist nicht beschränkt auf die hier angegebenen Beispiele, vielmehr können weitere Lagen im vorgenannten Sinne eingefügt sein, die aus fertigungstechnischen Gründen, oder zur weiteren Erhöhung der mechanischen Festigkeit, oder zur Erfüllung weiterer Funktionen sinnvoll oder notwendig sind.

Weitere vorteilhafte Maßnahmen und Ausführungsformen sind in den übrigen Unteransprüchen beschrieben; die Erfindung wird anhand der nachfolgenden Figuren näher beschrieben:
- **Fig. 1**: zeigt den schematischen Aufbau des erfindungsgemäßen Schutzschlauchs im Querschnitt.
- **Fig. 2**: zeigt den schematischen Aufbau des erfindungsgemäßen Schutzschlauchs in einer bevorzugten Ausführung für die Verwendung mit Laserlicht geringerer Leistung.
- **Fig. 3**: zeigt den schematischen Aufbau des erfindungsgemäßen Schutzschlauchs in einer bevorzugten Ausführung für die Verwendung mit Laserlicht sehr hoher Leistung in bewegten Anwendungen.
- **Fig. 4**: zeigt den schematischen Aufbau der Lichtleitkabel-Überwachung für eine Auswertung mit einem einzelnen Schaltkreis für die kombinierte Steck-, Bruch- und Laserlicht-Überwachung zwischen den Kontakten 31 und 32.
- **Fig. 5**: zeigt den schematischen Aufbau der Lichtleitkabel-Überwachung für eine Auswertung mit getrennten Schaltkreisen für die Steck- und Bruchüberwachung zwischen den Kontakten 31 und 33 und für die Laserlicht-Überwachung zwischen den Kontakten 32 und 33.

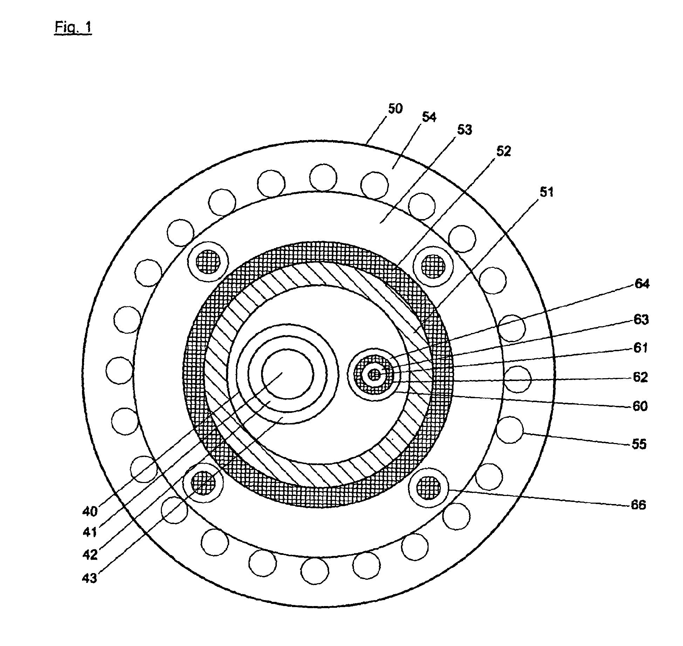

Erfindungsgemäß ist demnach eine Schutzeinrichtung für eine Lichtleitfaser vorgesehen wie sie in der Figur 1 näher dargestellt ist:

Die Schutzeinrichtung für eine Lichtleitfaser 40, die gelegentlich auch als 'Lichtleiter' bezeichnet wird, besteht aus einem Schutzschlauch 50, wobei der Schutzschlauch wenigstens zweilagig aufgebaut ist, bestehend aus einer inneren Lage 51 aus einem optisch transparenten, elektrisch isolierenden Material sowie mindestens einer darüberliegenden Lage aus einem nicht-transparenten Material 52, 53, 54, und mindestens zwei zusätzlich zum Lichtleiter durch den Schlauch geführten, gegeneinander isolierten elektrischen Leitern 61 und 62, die an einem Ende des Schlauches über eine elektrische Impedanz 23 und am anderen Ende mit einer die Impedanz kontrollierenden Messeinheit verbunden sind, wobei die Isolation 63 und 64 der beiden elektrischen Leiter 61 und 62 so gewählt ist, dass sie durch die Wärmewirkung von austretendem Licht bei einem Bruch des Lichtleiters oder durch die Strahlung, entweder zur Beeinflussung der elektrischen Leiter oder zu einem direkten Kontakt der elektrischen Leiter führt oder mindestens einer der elektrischen Leiter durchtrennt wird und eine Änderung der Impedanz durch die Messeinheit detektierbar ist.

Bei der Lichtleitfaser 40 handelt es sich um eine üblicherweise verwendete Lichtleitfaser, die aus einem Lichtleitfaser-Kern 41 besteht, der mit einem Lichtleitfaser-Mantel 42 ummantelt ist, der wiederum mit einer Beschichtung 43 (cladding) versehen ist.

Der Schutzschlauch 50 besteht erfindungsgemäß aus mehreren Lagen. Mindestens eine der weiter außen liegenden Lagen 52, 53, 54 ist erfindungsgemäß nichttransparent bzw. optisch dicht, damit aus der Faser austretendes Laserlicht auf keinen Fall nach außen gelangen kann.

Da dieses Material sich durch das Laserlicht zwangsläufig schnell aufheizt, besteht die Gefahr, dass es in der Folge eventuell zerstört wird. Dies ist insbesondere dann der Fall, wenn in der Lichtleitfaser hochenergetische Laserstrahlung geführt wird. Um dies zu vermeiden, ist eine innere Lage 51 eingefügt, die für das Laserlicht transparent ist und sich deshalb selbst nicht direkt aufheizt. Der Abstand einer möglichen Bruchstelle der Faser zum Außenmantel wird dadurch zusätzlich vorteilhafterweise erhöht, so dass das Laserlicht sich verteilen kann und der Außenmantel dadurch nicht so leicht zerstört wird.

Die transparente innere Lage 51 ist vorzugsweise ein Schlauch aus einem nicht eingefärbtem Fluorpolymer, z.B. PTFE, da dieses Material sehr temperaturfest ist. Bei geringeren Belastungen (wenn das Kabel nicht für höchste, sondern nur für mittlere Laserleistungen verwendet wird) kann auch ein anderer, preiswerterer transparenter Kunststoff verwendet werden, zum Beispiel Polyamid. Um die Gefahr der Zerstörung des nichttransparenten Außenmantels bei austretendem Laserlicht zu minimieren, kann das nichttransparente Material der darüberliegenden Lage nach innen optisch reflektierend ausgeführt sein, so dass es vom Laserlicht nicht aufgeheizt wird, oder es kann um den transparenten Schlauch 51 herum eine zusätzliche Lage 52 aus einem optisch reflektierendem, gut wärmeleitenden Material angebracht sein, vorzugsweise ein dichtes Geflecht aus blanken Kupfer-Drähten oder ein Metallwendelschlauch. Die Verwendung von blankem Kupfer, welches die über der transparenten Innenlage liegenden nicht-transparente Lage bildet, oder einen Teil derselben darstellt, z.B. in Form eines Geflechts, einer Umspinnung oder Bandierung, ist besonders bevorzugt, da dieses Material einen sehr hohen Reflexionsgrad für optische Strahlung im infraroten Bereich, eine hohe Wärmeleitfähigkeit und einen relativ hohen Schmelzpunkt in sich vereint.

Die eigentliche Faserbruchsensorik reagiert nicht nur auf das Durchschmelzen eines dicht bei der Faser liegenden elektrischen Leiters 62, sondern auch auf die Verminderung des elektrischen Widerstands zu einem zweiten elektrischen Leiter 61, der ebenfalls dicht an der Faser liegt. Vorzugsweise sind beide Leiter 61 und 62 zu einem dünnen Kabel zusammengefasst, besonders bevorzugt ist dies dann ein Miniatur-Koaxialkabel 60. Der Durchmesser dieses Kabels 60 sollte kleiner als 1 mm sein, besonders bevorzugt ist ein Durchmesser zwischen 0,8 und 0,5 mm. Die elektrischen Leiter 61, 62 des Kabels können aus Kupfer-Litze bestehen, die Verwendung von Stahl-Litzen oder Drähten ist aber ebenso möglich.

Die elektrische Isolation 63, 64 des Kabels 60 besteht aus einem der für elektrische Litzen üblicherweise verwendeten Isolationsmaterialien, z.B. aus PVC (Polyvinylchlorid), PU (Polyurethan), PA (Polyamid), PTFE (Polytetrafluorethylen, z.B. Teflon) oder FEP (Perfluorethylenpropylen). Im Gegensatz zur inneren transparenten Lage des Schutzschlauchs ist das Isolationsmaterial des Kabels 60 eingefärbt, vorzugsweise schwarz, z.B. durch Beigabe von Kohlenstoff, wodurch das Laserlicht besonders gut absorbiert wird, das Kabel sich also sehr schnell aufheizt und dadurch zerstört wird, wodurch die beiden Leiter 61, 62 in elektrischen Kontakt geraten, mindestens aber der Übergangswiderstand deutlich verringert wird. Dadurch kann aus der Faser austretendes Laserlicht bereits detektiert werden, lange bevor der elektrische Leiter durchschmilzt. Somit ist die Fähigkeit, einen Fehler zu erkennen, deutlich verbessert. Insbesondere ist dieses System auch in der Lage, bereits einen Fehler zu erkennen, wenn infolge eines Defekts der Lichtleitfaser 40 zunächst nur wenig Laserlicht aus der Faser austritt. Das besonders hohe Maß an Sicherheit kommt also zustande durch die Kombination einerseits der besonders empfindlichen Laserlicht-Detektion, die aus der erfindungsgemäßen Anordnung von Lichtleitfaser, elektrischen Leitern und deren Isolation zueinander resultiert, und andererseits der hohen Schutzwirkung des Schutzschlauches, der durch den erfindungsgemäßen mehrlagigen Aufbau das aus der Faser austretende Laserlicht im Inneren hält und einer Zerstörung besonders lange widersteht.

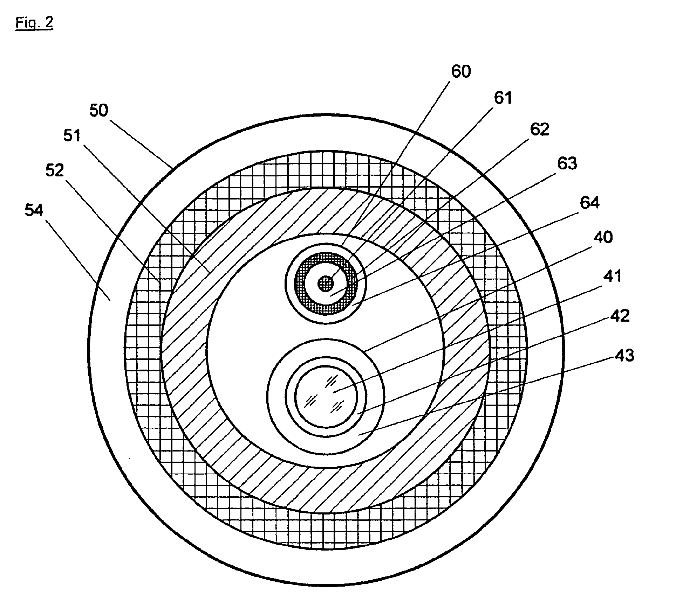

Der Schutzschlauch kann je nach gewünschtem Schutzgrad unterschiedlich ausgestaltet sein. Eine besonders einfache Ausführung ist nachfolgend beschrieben und in der Figur 2 gezeigt:

Die innere Lage 51 wird durch den transparenten Innenmantel gebildet, welcher vorzugsweise aus ungefärbtem bzw. nicht eingefärbten Fluorpolymer wie PTFE (Teflon) oder FEP in Form eines Schlauches besteht. Die Wandstärke sollte etwa 1 mm betragen. Darüber liegt eine nicht-transparente metallische Lage 52, vorzugsweise ausgebildet als dichtes Geflecht aus blankem Kupfer, ebenso möglich ist eine gewickelte Bandierung aus blankem Kupfer-Band, oder eine Umspinnung aus Kupfer-Drähten. Den äußeren Abschluss als mechanischer Schutz bildet ein flexibler Kunststoff-Mantel 54, der auf die nicht-transparente Lage 52 extrudiert ist. Hier können dieselben Werkstoffe wie für Mäntel von Elektro-Kabeln verwendet werden, z.B. Polyurethan (PU) oder andere Thermoplaste. Ein derart ausgeführter Schutzschlauch eignet sich besonders für die Übertragung von Laserleistungen unter 500 W bei fester Verlegung.

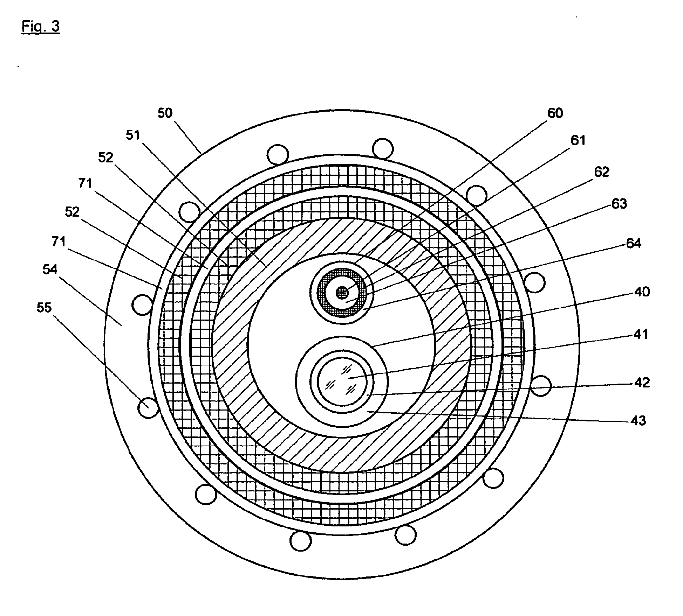

Ferner ist eine weitere Ausführung des Schutzschlauches bevorzugt, die sich besonders für die Übertragung höchster Laserleistungen in dauerflexiblen Anwendungen, z.B. an einem Roboter, eignet. Eine solche Ausführungsform ist in der Figur 3 dargestellt:

Die innere Lage 51 wird durch den transparenten Innenmantel gebildet, welcher vorzugsweise aus ungefärbtem PTFE (Teflon) besteht, die Wandstärke sollte mindestens 1 mm betragen. Darüber liegt eine erste nicht-transparente metallische Lage 52, vorzugsweise ausgebildet als dichtes Geflecht oder Umspinnung aus blanken Kupfer-Drähten. Darüber liegt eine dünne, der Isolation dienende Trennlage 71, die z.B. aus gewickeltem Teflon-Band oder einem extrudierten Thermoplast (z.B. PU) besteht. Darüber liegt eine zweite, weitere nicht-transparente metallische Lage 52, vorzugsweise ausgebildet als dichtes Geflecht oder Umspinnung aus blanken Kupfer-Drähten. Darüber liegt eine weitere, der Isolation dienende Trennlage 71. Darüber befindet sich ein Geflecht aus Seilen, Litzen oder Drähten, die mit möglichst geringer Schlagzahl verseilt sind. Diese Lage dient zur Zugentlastung und wird durch einzelne Zugentlastungselemente 55 (Seile, Litzen oder Drähte) gebildet, wobei es sich beispielsweise - aber nicht abschließend und ausschließlich - um Seile aus Aramid-Fasern (Kevlar) oder Stahl-Drähte handelt. Unter Geflecht wird in diesem Zusammenhang ein mehr oder weniger dichtes Netz verstanden. Den äußeren Abschluss bildet ein flexibler Kunststoff-Mantel 54, der auf die Zugentlastungs-Lage 55 extrudiert ist. Hier können dieselben Werkstoffe wie für Mäntel von Elektro-Kabeln verwendet werden, z.B. Polyurethan oder andere Thermoplaste.

Der Aufbau des Schutzschlauchs ist nicht beschränkt auf die angegebenen Beispiele, vielmehr können weitere Lagen eingefügt sein, die aus fertigungstechnischen Gründen, oder zur weiteren Erhöhung der mechanischen Festigkeit, oder zur Erfüllung weiterer Funktionen sinnvoll oder notwendig sind. So ist z.B. die Integration von isolierten elektrischen Litzen denkbar, mit denen Signale für Steuerungsaufgaben übertragen werden können. Entscheidend dabei ist, das die für die Schutzwirkung erforderlichen erfindungsgemäßen Komponenten vorhanden sind und in ihrer Funktionsweise nicht beeinträchtigt werden.

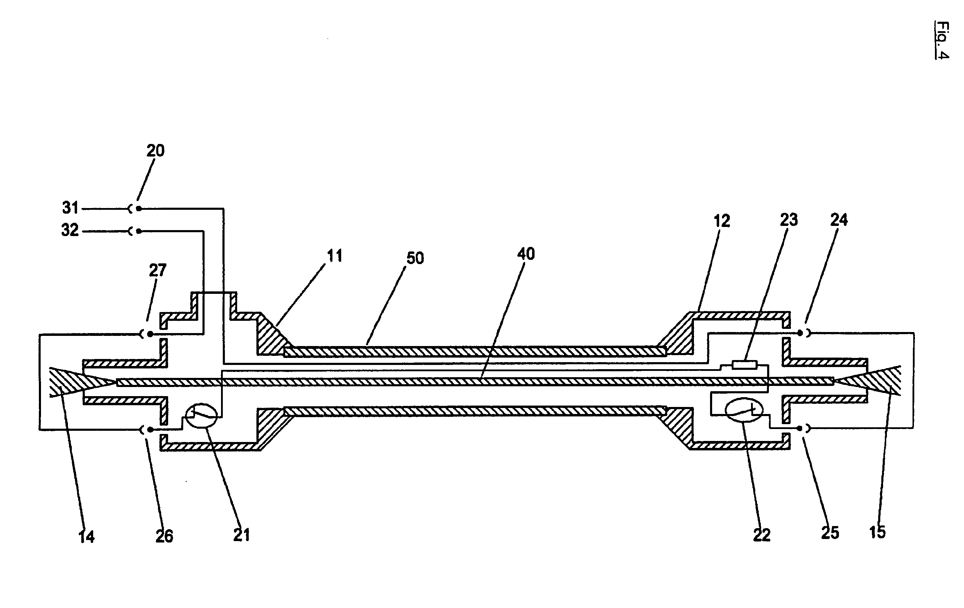

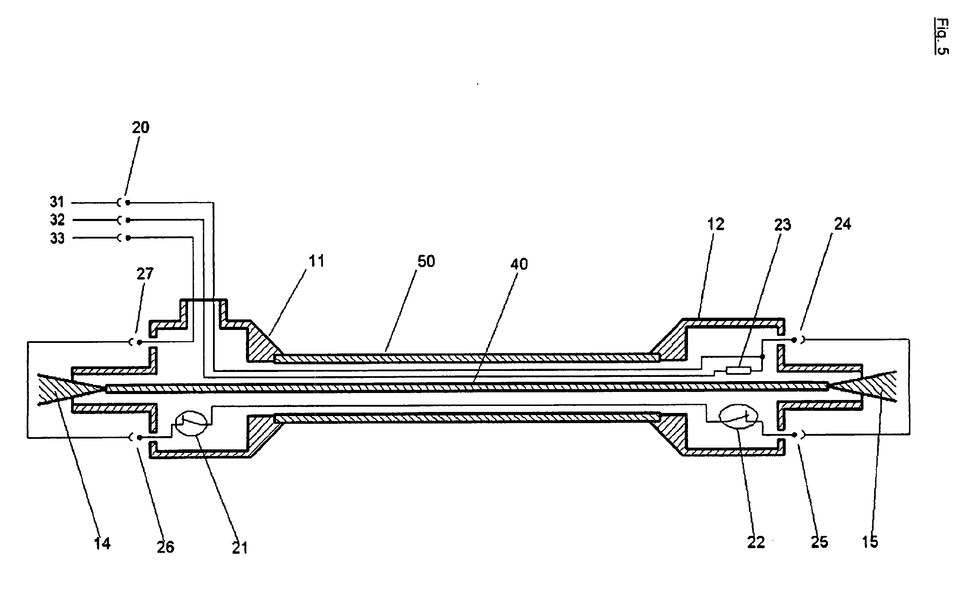

Das Lichtleitkabel hat den folgenden, typischen Aufbau (Figuren 4 und 5): an der Eingangsseite des Lichtleitkabels befindet sich ein Lichtleitkabelstecker 11, der zu einer entsprechenden Buchse (nicht dargestellt) der Laserquelle passt. Die Laserquelle liefert den Laserstrahl 14, der in die Lichtleitfaser 40 eingekoppelt wird. Am Stecker befinden sich elektrische Kontakte 26, 27, die beim Stecken des Steckers durch die in der Buchse befindlichen Gegenkontakte kurzgeschlossen werden, bzw. beim Ziehen des Steckers zwangsweise geöffnet werden. Ebenfalls am Eingangsstecker 11 ist ein Kabel angebracht, mit dem die Leiter der elektrischen Sicherheitsschleife aus dem Lichtleitkabel herausgeführt werden, und das mit einem elektrischen Steckverbinder 20 abgeschlossen ist. An diesem Steckverbinder werden die Kontakte 31, 32 bzw. 31, 32 und 33 abgegriffen, an denen die Schaltung zur Überwachung der Leiterschleife bzw. der elektrischen Impedanz angeschlossen wird. Die Lichtleitfaser 40 wird zusammen mit den Leitern 61, 62 bzw. dem Kabel 60 innerhalb des Schutzschlauchs 50 geführt. An der Ausgangsseite des Lichtleitkabels befindet sich wieder ein Stecker 12, an dem sich in gleicher Weise wie am Eingangsstecker 11 elektrische Kontakte 24, 25 befinden, die beim Stecken des Steckers durch die in der Buchse (z.B. an einer Laserbearbeitungsoptik) befindlichen Gegenkontakte kurzgeschlossen werden, bzw. beim Ziehen des Steckers zwangsweise geöffnet werden. Innerhalb des Ausgangssteckers 12 befindet sich die elektrische Impedanz 23. In beiden Steckern 11, 12 befinden sich außerdem Temperaturschalter 21, 22. Am Ausgangsstecker 12 verlässt der Laserstrahl 15 die Lichtleitfaser 40.

Je nach verwendeter Auswertungsschaltung können die einzelnen Komponenten der Überwachung unterschiedlich miteinander verschaltet sein. Der einfachste Fall ist in Figur 4 dargestellt, bei dem alle Komponenten des Überwachungssystems, d.h. Stecküberwachung 24, 25, 26, 27, Temperaturschalter 21, 22, kombinierte Bruchsicherung mit Laserlicht-Detektion 61, 62, in Serie geschaltet sind. Damit ein Querschluss als Fehler erkannt wird, muss hierbei am anderen Ende des Lichtleitkabels eine elektrische Impedanz 23 zusätzlich in Serie geschaltet werden, z.B. ein definierter elektrischer Widerstand. Die Kontrollschaltung muss dann den Widerstand der Leiterschleife an den Kontakten 31 und 32 messen und den Laser abschalten, sobald der Widerstand vom Sollwert deutlich abweicht, d.h. eine Abschaltung muss erfolgen, wenn der Widerstand zu klein oder zu groß wird. Schaltungen mit einem solchen Verhalten sind unter dem Begriff Fensterkomparator bekannt.

Die Wahl der Impedanz 23 lässt sich den Einsatzbedingungen des LLK anpassen. Wenn das LLK vorzugsweise mit kleiner bis mittlerer Laserleistung betrieben wird, z.B. mit Leistungen unterhalb 500 W, dann wird durch austretendes Licht bei einem Defekt der Faser auf jeden Fall die Isolation 63, 64 aufgeschmolzen; das Durchtrennen der Leiter 61 und/oder, 62 ist dann weniger wahrscheinlich. Der Widerstand der Leiterschleife (60) wird also eher sinken. Ein besonders schnelles Ansprechen der Überwachungsschaltung wird in diesem Fall erreicht, wenn die Impedanz einen relativ hohen Widerstandswert hat, z.B. im Bereich von 1 MΩ, und die Überwachungsschaltung das Abweichen der Impedanz in einem relativ engen Fenster überprüft, also z.B. bei einer Über- oder Unterschreitung des Widerstandswertes um 30% bis 50% auslöst. Dann wird bereits bei einer nur schwachen Leitfähigkeit der Isolation ein Fehler erkannt. Andererseits sind die für diesen Widerstandsbereich erforderlichen Messströme sehr gering, wodurch sich die Gefahr von Signal-Einstreuungen erhöht und dadurch Fehl-Auslösungen auftreten könnten. Um der Gefahr von elektrischen Einstreuungen vorzubeugen, ist es eher bevorzugt, die Impedanz 23 mit einem mittleren Widerstandswert zu versehen, z.B. im Bereich von 1 kΩ bis 10 kΩ. Dieser Impedanz-Bereich ist gleichzeitig bevorzugt bei der Verwendung des LLK für sehr hohe Laserleistungen (z.B. über 500 W), da in diesem Fall bei einem Bruch der Faser die Leiter 61 und/oder 62 sehr schnell durchschmelzen und deshalb wahrscheinlicher eine Erhöhung des Widerstandes der Leiterschleife 60 auftritt. Das Fenster der Überwachungsschaltung ist in diesem Fall auf diesen Widerstandsbereich anzupassen.

Wird in dieser Weise sowohl die Impedanz 23 als auch das Fenster der Überwachungsschaltung dem Verwendungszweck des LLK angepasst, also gleichsam codiert, dann wird damit gleichzeitig erreicht, dass an der jeweiligen Laserquelle nur geeignete LLK verwendet werden können. Dadurch ist es möglich, z.B. die Stärke des Schutzschlauchs und damit die Schutzwirkung ebenfalls an den Verwendungszweck des LLK anzupassen und auf die Weise ein LLK für geringere Laserleistungen preiswerter zu gestalten, da eine irrtümliche Verwendung an einer Laserquelle mit hoher Leistung durch die Codierung der Impedanz 23 und die entsprechende Anpassung des Fensters der Überwachungsschaltung ausgeschlossen wird.

Eine andere Möglichkeit der Verschaltung ist in Figur 5 dargestellt. Hier sind zwischen den Kontakten 31 und 33 die Stecküberwachung 24, 25, 26 und 27, die Temperaturschalter 21 und 22 und die Bruchsicherung 62 in Serie geschaltet. Eine Impedanz in diesem Kreis ist nicht nötig, da ein Querschluss nicht auftreten kann, weil die Rückleitung 66 der Leiterschleife konstruktiv getrennt von der Bruchsicherung 62 untergebracht ist. Dadurch ist die sich ergebende Leiterschleife zwischen den Kontakten 31 und 33 sehr niederohmig und muss nur auf Erhöhung des Widerstandes bzw. Unterbrechung kontrolliert werden. Dadurch kann hier direkt z.B. ein sog. Not-Aus-Schaltgerät angeschlossen werden. Die Impedanz 23 wird in dieser Ausführung nur für die Laserlicht-Detektion benötigt, die von den Leitern 61 und 62 (als Kabel 60 zusammengefasst) gebildet wird. Die Kontrolle der Impedanz findet wie im Beispiel von Figur 4 z.B. mit einem Fensterkomparator zwischen den Kontakten 31 und 32 statt.

### Bezugszeichenliste

- 11: Lichtleitkabelstecker, Eingangsseite
- 12: Lichtleitkabelstecker, Ausgangsseite
- 14: Laserstrahl, Einkoppelseite
- 15: Laserstrahl, Auskoppelseite
- 20: mehrpoliger elektrischer Steckverbinder
- 21: Temperaturschalter (Öffner)
- 22: Temperaturschalter (Öffner)
- 23: definierte elektrische Impedanz (Widerstand oder Kapazität)
- 24: Kontakt für Stecküberwachung
- 25: Kontakt für Stecküberwachung
- 26: Kontakt für Stecküberwachung
- 27: Kontakt für Stecküberwachung
- 31: Anschluss für Schaltung zur Kontrolle der elektrischen Impedanz
- 32: Anschluss für Schaltung zur Kontrolle der elektrischen Impedanz
- 33: Anschluss für Schaltung zur Kontrolle der elektrischen Impedanz
- 40: Lichtleitfaser
- 41: Lichtleitfaser-Kern
- 42: Lichtleitfaser-Mantel
- 43: Lichtleitfaser-Beschichtung (cladding)
- 50: flexibler Schutzschlauch
- 51: transparenter Schlauch (innere Lage des Schutzschlauchs)
- 52: nicht-transparente Lage des Schutzschlauchs (z.B. Cu-Geflecht oder Metallwendel)
- 53: Lage des Schutzschlauchs mit mehreren elektrischen Leitern
- 54: äußere Lage des Schutzschlauchs
- 55: Zugentlastungselemente (z.B. Stahldrähte oder Aramidfasern)
- 60: Leiterschleife (zweipoliges Kabel (z.B. Koaxialkabel))
- 61: Leiter 1 des zweipoligen Kabels
- 62: Leiter 2 des Zweipoligen Kabels
- 63: Isolation
- 64: Isolation
- 66: elektrischer Leiter
- 71: Trennlage (z.B. Thermoplast oder Bandierung)

## Patentansprüche

1. Schutzeinrichtung für eine Lichtleitfaser (40) bestehend aus einem Schutzschlauch (50) mindestens einer durch den Schutzschlauch geführten elektrischen Leiterschleife (60) mit einer definierten elektrischen Impedanz und einer besonderen Isolation der Leiterschleife, wobei
- eine Leiterschleife (60) zusätzlich zur Lichtleitfaser (40) durch den Schlauch (50) geführt ist, bestehend aus zwei gegeneinander isolierten elektrischen Leitern (61, 62), die an einem Ende des Schlauches über eine definierte elektrische Impedanz (23) und am anderen Ende mit einer die Impedanz kontrollierenden Messeinheit verbunden sind,
- die Isolation (63, 64) der beiden elektrischen Leiter (61, 62) so gewählt ist, dass sie durch die Wärmewirkung von austretendem Licht bei einem Bruch der Lichtleitfaser oder durch die Strahlung, entweder zur Beeinflussung der elektrischen Leiter oder zu einem direkten Kontakt der elektrischen Leiter führt oder mindestens einer der elektrischen Leiter durchtrennt wird, und
- eine Änderung des Widerstandes durch die Messeinheit detektierbar ist,
**dadurch gekennzeichnet, daß** der Schutzschlauch (50) einen zwei- oder mehrlagigen Aufbau besitzt, bestehend aus einer inneren Lage (51) aus einem optisch transparenten, elektrisch isolierenden Material sowie mindestens einer darüberliegenden Lage (52) aus einem nicht-transparenten Material, und daß die beiden neben der Lichtleitfaser (40) durch den Schlauch (50) geführten elektrischen Leiter (61, 62) zu einem Kabel (60) zusammenfasst sind.

2. Schutzeinrichtung nach Anspruch 1, **dadurch gekennzeichnet, dass** die Lichtleitfaser (40) für hochenergetische Laserstrahlung geeignet ist.

3. Schutzeinrichtung nach Anspruch 1 oder 2, **dadurch gekennzeichnet, dass** die innere transparente Lage (51) des Schutzschlauchs (50) ein Schlauch aus einem nicht eingefärbten Fluorpolymer ist.

4. Schutzeinrichtung nach einem der Ansprüche 1 bis 3, **dadurch gekennzeichnet, dass** sich zwischen der inneren transparenten Lage (51) und einer darüberliegenden, nicht-transparenten Lage (52) des Schutzschlauches (50) eine nach innen reflektierende Zwischenschicht befindet.

5. Schutzeinrichtung nach Anspruch 4, **dadurch gekennzeichnet, dass** es sich bei der Zwischenschicht um eine metallische Schicht handelt.

6. Schutzeinrichtung nach Anspruch 5, **dadurch gekennzeichnet, dass** die metallische Zwischenschicht ein Kupfer-Geflecht ist.

7. Schutzeinrichtung nach Anspruch 5 oder 6, **dadurch gekennzeichnet, dass** die metallische Zwischenschicht ein flexibler Metallwendelschlauch ist.

8. Schutzeinrichtung nach wenigstens einem der vorhergehenden Ansprüche , **dadurch gekennzeichnet, dass** das durch den Schlauch geführte Kabel ein Koaxialkabel ist.

9. Schutzeinrichtung nach Anspruch 8, wobei ein Durchmesser des Kabels (60) zwischen 0,5 und 0,8 mm besonders bevorzugt ist.

10. Schutzeinrichtung nach einem oder mehreren der vorhergehenden Ansprüche 1 bis 9, **dadurch gekennzeichnet, dass** der Schutzschlauch (50) einen mehrschichtigen Aufbau (von innen nach außen) aufweist, umfassend
a. eine innerste Lage (51), die durch einen transparenten, ungefärbten Schlauch aus PTFE gebildet wird;
b. darüber liegend eine nicht-transparente Lage (52), insbesondere eine metallische Lage, bevorzugt ein Geflecht, eine Umspinnung oder eine Bandierung aus blankem Kupfer,
c. eine dem mechanischen Schutz dienende und den äußeren Abschluss des Schutzschlauches (50) bildende Ummantelung (54).

11. Schutzeinrichtung nach einem oder mehreren der vorhergehenden Ansprüche 1 bis 9, **dadurch gekennzeichnet, dass** der Schutzschlauch (50) einen mehrschichtigen Aufbau (von innen nach außen) aufweist, umfassend
a. eine innerste Lage (51), die durch einen transparenten, ungefärbten Schlauch aus PTFE gebildet wird;
b. darüber liegend eine erste nicht-transparente Lage (52), insbesondere eine metallische Lage, bevorzugt ein Geflecht, eine Umspinnung oder eine Bandierung aus blankem Kupfer,
c. gefolgt von einer ersten, isolierenden Trennlage (71),
d. darüber liegend eine weitere nicht-transparente Lage (52), insbesondere eine metallische Lage, bevorzugt ein Geflecht, eine Umspinnung oder eine Bandierung aus blankem Kupfer,
e. gefolgt von einer weiteren, isolierenden Trennlage (71),
f. die von einer Lage aus Zugentlastungselementen (55) ummantelt ist,
g. und eine dem mechanischen Schutz dienende und den äußeren Abschluss des Schutzschlauches (50) bildende Ummantelung (54).

12. Schutzeinrichtung nach Anspruch 11, **dadurch gekennzeichnet, dass** die Zugentlastungselemente (55) Seile aus Aramid-Fasern sind.

13. Schutzeinrichtung nach Anspruch 11, **dadurch gekennzeichnet, dass** die Zugentlastungselemente (55) Stahldrähte sind.

14. Schutzeinrichtung nach wenigstens einem der vorhergehenden Ansprüche, **dadurch gekennzeichnet, dass** die Isolation (63, 64) der zusammen mit der Lichtleitfaser (40) durch den Schutzschlauch (50) geführten elektrischen Leiter (61, 62), die die zur Überwachung der Impedanz dienende Leiterschleife bilden, aus einem Isolationswerkstoff wie PVC, PU, PA, PTFE oder FEP besteht.

15. Schutzeinrichtung nach Anspruch 14, **dadurch gekennzeichnet, dass** der Isolationswerkstoff durch Kohlenstoffbeigabe schwarz eingefärbt ist.

16. Schutzeinrichtung nach einem oder mehreren der vorgenannten Ansprüche, **dadurch gekennzeichnet, dass** nicht-transparente Lagen (52), isolierenden Trennlagen (71) und dem mechanischen Schutz dienenden Lagen (54, 55) alternierend angeordnet sind.

## Claims

1. A protection means for an optical fiber (40), said protection means consisting of a protective tube (50), at least one electric conductor loop (60) passed through the protective tube, said conductor loop having a well-defined electric impedance and a special insulation, wherein
- a conductor loop (60), in addition to the optical fiber (40), is passed through the tube (50), said conductor loop consisting of two electric conductors (61, 62) insulated with respect to each other and connected at one end of the tube via a well-defined electric impedance (23) and at the other end with a measuring unit controlling the impedance;
- the insulation (63, 64) of the two electric conductors (61, 62) is selected such that, as a result of the heating effect of escaping light upon rupture of the optical fiber or as a result of radiation, the insulation either causes an influence on the electric conductors or direct contact of the electric conductors or effects severing of at least one of the electric conductors; and
- changes in resistance can be detected by the measuring unit,
**characterized in that**
the protective tube (50) has a two- or multi-ply structure consisting of an inner ply (51) made of an optically transparent, electrically insulating material and at least one overlying ply (52) made of a non-transparent material, and that the two electric conductors (61, 62) passed through the tube (50) along the optical fiber (40) are combined into a single cable (60).

2. The protection means according to claim 1, **characterized in that** the optical fiber (40) is suitable for high-energy laser radiation.

3. The protection means according to claim 1 or 2, **characterized in that** the inner transparent ply (51) of the protective tube (50) is a tube made of a non-colored fluoropolymer.

4. The protection means according to any of claims 1 to 3, **characterized in that** an intermediate layer reflecting towards the inside is situated between the inner transparent ply (51) and the overlying non-transparent ply (52) of the protective tube (50).

5. The protection means according to claim 4, **characterized in that** the intermediate layer is a metallic layer.

6. The protection means according to claim 5, **characterized in that** the metallic intermediate layer is a copper mesh.

7. The protection means according to claim 5 or 6, **characterized in that** the metallic intermediate layer is a flexible metal spiral tube.

8. The protection means according to at least one of the preceding claims, **characterized in that** the cable passed through the tube is a coaxial cable.

9. The protection means according to claim 8, wherein the cable (60) in a particularly preferred fashion has a diameter of between 0.5 and 0.8 mm.

10. The protection means according to one or more of claims 1 to 9, **characterized in that** the protective tube (50) has a multi-layered structure (from the inside to the outside) comprising
a. an innermost ply (51) formed by a transparent, non-colored tube made of PTFE;
b. an overlying non-transparent ply (52), especially a metallic ply, preferably a mesh, a wrapping or taping made of bare copper;
c. a sheathing (54) used for mechanical protection and forming the outer boundary of the protective tube (50).

11. The protection means according to one or more of claims 1 to 9, **characterized in that** the protective tube (50) has a multi-layered structure (from the inside to the outside) comprising
a. an innermost ply (51) formed by a transparent, non-colored tube made of PTFE;
b. an overlying first non-transparent ply (52), especially a metallic ply, preferably a mesh, a wrapping or taping made of bare copper;
c. followed by a first insulating interlayer (71),
d. another overlying non-transparent ply (52), especially a metallic ply, preferably a mesh, a wrapping or taping made of bare copper;
e. followed by another insulating interlayer (71),
f. which is sheathed by a ply of tension-relieving elements (55), and
g. a sheathing (54) used for mechanical protection and forming the outer boundary of the protective tube (50).

12. The protection means according to claim 11, **characterized in that** the tension-relieving elements (55) are cords made of aramide fiber.

13. The protection means according to claim 11, **characterized in that** the tension-relieving elements (55) are steel wires.

14. The protection means according to at least one of the preceding claims, **characterized in that** the insulation (63, 64) of the electric conductors (61, 62) passed through the protective tube (50) together with the optical fiber (40) and forming the conductor loop used to monitor the impedance is made of an insulating material such as PVC, PU, PA, PTFE or FEP.

15. The protection means according to claim 14, **characterized in that** the insulating material is colored black as a result of including carbon.

16. The protection means according to one or more of the preceding claims, **characterized in that** the non-transparent plies (52), the insulating interlayers (71) and the plies used for mechanical protection (54, 55) are in alternating arrangement.

## Revendications

1. Dispositif de protection pour une fibre guide de lumière (40), constitué d'un flexible de protection (50), d'au moins une boucle de conducteur (60) électrique ayant une impédance électrique définie et guidée à travers le flexible de protection et d'une isolation particulière de la boucle de conducteur,
- une boucle de conducteur (60) étant guidée en plus de la fibre guide de lumière (40) à travers le flexible (50), constituée de deux conducteurs (61, 62) électriques isolés l'un par rapport à l'autre, qui sont reliés sur une extrémité du flexible par une impédance (23) électrique définie et sur l'autre extrémité à une unité de mesure contrôlant l'impédance,
- l'isolation (63, 64) des deux conducteurs électriques (61, 62) étant choisie de telle sorte qu'elle aboutit, par l'effet de chaleur de lumière sortante lors d'une rupture de la fibre guide de lumière ou par le rayonnement, soit à une influence sur les conducteurs électriques soit à un contact direct des conducteurs électriques ou à ce qu'au moins l'un des conducteurs électriques est coupé, et
- une variation de la résistance pouvant être détectée par l'unité de mesure,
**caractérisé en ce que** le flexible de protection (50) présente une structure à deux ou plusieurs couches comprenant une couche (51) intérieure à base d'un matériau optiquement transparent et électriquement isolant et au moins une couche (52) sus-jacente à base d'un matériau non transparent, et **en ce que** les deux conducteurs (61, 62) électriques, guidés à côté de la fibre guide de lumière (40) à travers le flexible (50) sont regroupés en un câble (60).

2. Dispositif de protection selon la revendication 1, **caractérisé en ce que** la fibre guide de lumière (40) convient pour un rayonnement laser à haute énergie.

3. Dispositif de protection selon la revendication 1 ou 2, **caractérisé en ce que** la couche (51) transparente intérieure du flexible de protection (50) est un flexible à base d'un polymère fluoré non teinté.

4. Dispositif de protection selon l'une quelconque des revendications 1 à 3, **caractérisé en ce qu'**une couche intermédiaire réfléchissant vers l'intérieur se trouve entre la couche (51) transparente intérieure et une couche (52) non transparente et sus-jacente du flexible de protection (50).

5. Dispositif de protection selon la revendication 4, **caractérisé en ce qu'**il s'agit d'une couche métallique en ce qui concerne la couche intermédiaire.

6. Dispositif de protection selon la revendication 5, **caractérisé en ce que** la couche intermédiaire métallique est un treillis en cuivre.

7. Dispositif de protection selon la revendication 5 ou 6, **caractérisé en ce que** la couche intermédiaire métallique est un tuyau hélicoïdal métallique flexible.

8. Dispositif de protection selon au moins l'une quelconque des revendications précédentes, **caractérisé en ce que** le câble guidé à travers le flexible est un câble coaxial.

9. Dispositif de protection selon la revendication 8, un diamètre du câble (60) entre 0,5 et 0,8 mm étant particulièrement préféré.

10. Dispositif de protection selon l'une quelconque ou plusieurs des revendications précédentes 1 à 9, **caractérisé en ce que** le flexible de protection (50) présente une structure à plusieurs couches (de l'intérieur vers l'extérieur), comprenant
a. une couche (51) intérieure, qui est formée par un flexible transparent et non teinté à base de PTFE ;
b. par-dessus une couche (52) non transparente, en particulier une couche métallique, de préférence un treillis, un guipage ou un enrubannage à base de cuivre nu,
c. une enveloppe (54) servant à la protection mécanique et formant la terminaison extérieure du flexible de protection (50).

11. Dispositif de protection selon l'une quelconque ou plusieurs des revendications précédentes 1 à 9, **caractérisé en ce que** le flexible de protection (50) présente une structure multicouches (de l'intérieur vers l'extérieur), comprenant
a. une couche (51) intérieure, qui est formée par un flexible transparent et non teinté à base de PTFE,
b. par-dessus une première couche (52) non transparente, en particulier une couche métallique, de préférence un treillis, un guipage ou un enrubannage à base de cuivre nu,
c. suivie d'une première couche de séparation (71) isolante,
d. par-dessus une autre couche (52) non transparente, en particulier une couche métallique, de préférence un treillis, un enrobage ou un enrubannage à base de cuivre nu,
e. suivie d'une autre couche de séparation (71) isolante,
f. qui est enveloppée par une couche d'éléments de soulagement de traction (55),
g. et une enveloppe (54) servant à la protection mécanique et formant la terminaison extérieure du flexible de protection (50).

12. Dispositif de protection selon la revendication 11, **caractérisé en ce que** les éléments de soulagement de traction (55) sont des câbles à base de fibres d'aramide.

13. Dispositif de protection selon la revendication 11, **caractérisé en ce que** les éléments de soulagement de traction (55) sont des fils d'acier.

14. Dispositif de protection selon au moins l'une quelconque des revendications précédentes, **caractérisé en ce que** l'isolation (63, 64) des conducteurs (61, 62) électriques guidés conjointement avec la fibre guide de lumière (40) à travers le flexible de protection (50), qui forment la boucle de conducteur servant au contrôle de l'impédance, est à base d'un matériau d'isolation tel que PVC, PU, PA, PTFE ou FEP.

15. Dispositif de protection selon la revendication 14, **caractérisé en ce que** le matériau d'isolation est teinté en noir par l'ajout de carbone.

16. Dispositif de protection selon l'une quelconque des revendications ou plusieurs des revendications précédentes, **caractérisé en ce que** des couches (52) non transparentes, des couches de séparation (71) isolantes et des couches (54, 55) servant à la protection mécanique sont disposées en alternance.
